# EUROPEAN PATENT APPLICATION

(11) **EP 1 151 899 A1**
(43) Date of publication of application: **07.11.2001**
(21) Application number: 00901909.2
(22) Date of filing: 26.01.2000
(51) Int. Cl.: B60R 21/26

(54) **GAS GENERATOR**

(30) Priority: 29.01.1999 JP 2244699
(71) Applicant: Nippon Kayaku Kabushiki Kaisha, Tokyo 102-8172 (JP)
(72) Inventor: TAGUCHI, Seigo, Himeji Fac. of Nippon Kayaku K-K., Himeji-shi, Hyogo 679-2123 (JP); OCHI, Hiroyuki, Himeji Fac. of Nippon Kayaku K.-K., Himeji-shi, Hyogo 679-2123 (JP); SAKO, Kenji, Himeji Fac.of Nippon Kayaku K.-K, Himeji-shi, Hyogo 679-2123 (JP); KISHINO, Yoshiyuki, Himeji F. of Nippon Kayaku K-K, Himeji-shi, Hyogo 679-2123 (JP); SAITO, Tetsuo, Himeji Fac. of Nippon Kayaku K.-K., Himeji-shi, Hyogo 679-2123 (JP)
(74) Representative: Dronne, Guy
(86) International application number: JP0000387
(87) International publication number: WO0044594

(57) **Abstract**

A gas generator, wherein an inner tube material (3), a filter member (4), and gas producing agent (5) are disposed or charged in a housing (1) and an igniter (6) to burn the gas producing agent (5) contained in the filter member (4) is disposed in the housing (1), whereby a burst material (2) which is formed cylindrically beforehand is installed in the housing (1) so as to close all gas discharging holes (7a) formed in the housing (1).

## Description

### Field of the Invention

The present invention relates to a gas generator for expanding and inflating an airbag for protecting a passenger from collision of an automobile.

### Background Art

A gas generator for instantaneously expanding and inflating an airbag for the purpose of protecting a passenger from shock caused through collision of an automobile is assembled within an airbag module mounted into a steering wheel or an instrument panel. Such a gas generator functions to instantaneously generate a large amount of high temperature gas at the time of collision by a collision detection signal from a collision sensor.

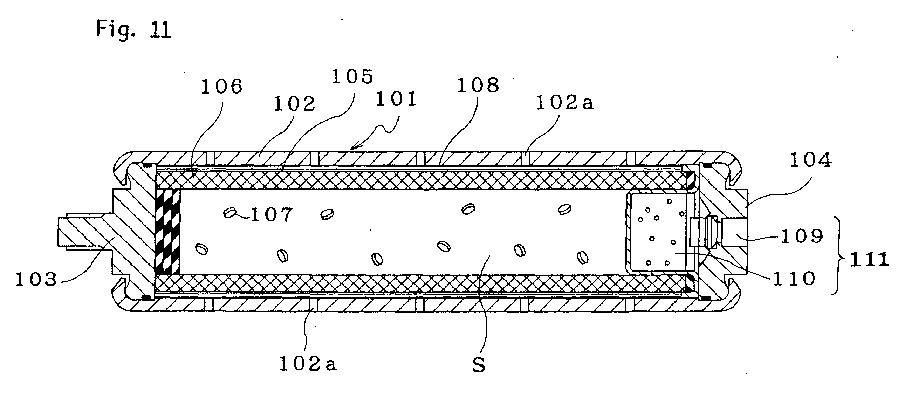

One example of gas generator is. arranged to expand and inflate an airbag provided on the passenger side or one coping with collision from the side as illustrated in Fig. 11. The gas generator of Fig. 11 is comprised of an elongated cylindrical housing 101 with a closed space S being formed in its interior by an outer tube 102 having a plurality of gas discharging holes 102a and two cover members 103, 104, wherein an inner tube 105, a filter member 106, and a gas generating agent 107 are sequentially inserted and filled from the outer tube 102 towards an axial center thereof. The respective gas discharging holes 102a of the housing 101 are closed by a burst plate 108 that is adhered to an inner periphery of the outer tube 102. In addition, the cover member 104 is mounted with an igniter 111 including a squib 109 that is ignited upon receipt of a collision detection signal from a collision sensor (not shown), and an enhancer 110 that is ignited upon ignition of the squib 109.

In the gas generator, the squib 109 is ignited upon receipt of the collision detection signal from the collision sensor whereupon the enhancer 110 is ignited, and when the gas generating agent 107 is further combusted using a flame of the enhancer 110, a large amount of high temperature gas is rapidly generated. The large amount of high temperature gas that has been generated within the housing 101 flows into the filter member 106, undergoes slug collection and cooling, and is discharged from the respective gas discharging holes 102a into the airbag via the burst plate 108 that has been burst in accordance with an increase in gas pressure within the housing 101 so as to rapidly expand and inflate the airbag.

In a conventional gas generator, it is necessary that sealing properties (tight sealing properties) of all gas discharging holes need to be ensured by setting the inner periphery of the outer tube 102 to have a suitable surface roughness through mechanical processing and by maintaining cleanliness through cleaning operations to improve adhesiveness of the burst plate 108. Performing such mechanical processing or cleaning operations prior to adhesion of the burst plate 108 will reduce the productivity of the gas generator and will also result in an increase in manufacturing costs.

In a structure for the housing in which respective open ends of the outer tube 102 are closed by two cover members 103, 104, it will be necessary to seal all of the gas discharging holes 102a by means of the burst plate 108 and to further seal clearances between the respective cover members 103, 104 and the inner periphery of the outer tube 102 for maintaining tight sealing properties within the housing 101, thereby resulting in a large number of sealing spots wherein sealing properties (tight sealing properties) of all of these need to be secured.

Furthermore, the demand for downsizing of gas generator has increased in these years, and there has been a tendency to downsize the diameter of the housing in reference to such a demand. It will therefore become difficult to adhere the burst plate in accordance with downsizing the diameter of housing when the arrangement that the burst plate is adhered to the inner periphery of the outer tube is employed. Especially in case of the gas generator as illustrated in Fig. 11 that is provided for an airbag on the passenger side or for one coping with collision from the side, an elongated cylindrical housing 101 is employed and difficulties in adhering the burst plate 108 to the inner periphery of the outer tube 102 will become remarkable by downsizing the diameter of the housing 101.

The present invention provides for an arrangement in which all of the gas discharging holes of the housing are easily closed, thereby improving the productivity of the gas generator.

### Disclosure of the Invention

In the gas generator according to the present invention, a burst material that is preliminarily formed into a cylindrical shape (cylindrical cup-like shape or the like) is fitted into an interior of a housing with the purpose of closing all gas discharging holes of the housing.

With this arrangement, all of the gas discharging holes of the housing may be closed through a simple operation of fitting a burst material, which is preliminarily formed into a cylindrical shape (cylindrical cup-like shape or the like), into the interior of the housing.

It is further possible to dispose and fill a filter member and a gas generating agent into the burst material and to dispose an igniter for combusting the gas generating agent into the housing.

The gas generator according to the present invention that is employed as a gas generator (for use with an airbag) provided on the passenger side or one coping with collision from the side may specifically be of a style in which the arrangement is comprised of a housing formed by closing both open ends of an elongated cylindrical outer tube by means of two cover members and by swaging the respective cover members through bending the respective open ends of the outer tube inward in a radial direction, wherein an igniter is disposed at either cover member for combusting a gas generating agent within a filter member. In such an arrangement, it is preferable to fit a burst material, which is preliminarily formed into a cylindrical shape (cylindrical cup-like shape or the like), into the housing and to bend open ends of the burst material and the open ends of the outer tube inward with respect to a radial direction. The housing may be alternatively arranged in that the housing is comprised of a bottomed, elongated cylindrical outer tube having one open end and a single cover member for closing the open end of the outer tube.

The gas generator according to the present invention that is employed as a gas generator (for use with an airbag) provided on a driver side may specifically be of a style in which the arrangement is comprised of a housing of double cylindrical structure including short cylindrical outer tube and inner tube and two, upper and lower cover plates for closing both open ends of the respective tubes, wherein a filter member and a gas generating agent are disposed and filled between a burst material and the inner tube, and wherein an igniter is disposed within the inner tube. The structure of the housing may also be of a single cylindrical structure.

By forming the burst material into a cylindrical shape (cylindrical cup-like shape or the like) and by disposing and filling the filter member and the gas generating agent into the interior of the burst material, it is also possible to preliminarily compose an unit.

With this arrangement, the burst material, the filter member, and the gas generating agent may be disposed into the housing 1 by simply fitting the unit into the housing.

### Brief Explanation of the Drawings

Fig. 1 is a sectional view of the gas generator according to the present invention, which is arranged to expand an airbag provided on the passenger side or one coping with collision from the side.
Fig. 2 is a sectional view cut along A-A in Fig. 1.
Fig. 3 are enlarged views of principal parts of Fig. 1, wherein (a) is an enlarged view of a cylindrical cup-like burst material seen from a bottom side of the cup, (b) is an enlarged view of the cylindrical cup-like or cylindrical burst material seen from one open end side, and (c) is an enlarged view of the cylindrical burst material seen from the other open end side opposite to (b).
Fig. 4 are views illustrating members for forming the inner tube material, wherein (a) is a view illustrating a base metal comprised by expanded metal, (b) is a view illustrating a condition in which the base metal is being expanded, and (c) is a perspective view illustrating an inner tube material formed of expanded metal.
Fig. 5 is a sectional view illustrating an expanded condition of the expanded metal as illustrated in Fig. 4.
Fig. 6 are views for illustrating members forming a filter member, wherein (a) is an enlarged view illustrating a stockinet wire gauze, (b) is an enlarged view illustrating a crimp-woven metallic wire rod, and (c) is a perspective view illustrating a readily formed filter member.
Fig. 7 is a sectional view illustrating processes for assembling the gas generator of Fig. 1.
Fig. 8 is an enlarged sectional view illustrating a relationship between the burst material of the gas generator of Fig. 1 and a cap with a brim.
Fig. 9 is a sectional view of the gas generator according to the present invention, which is arranged to expand an airbag provided on a driver side.
Fig. 10 is a sectional view illustrating processes for assembling the gas generator of Fig. 9.
Fig. 11 is a sectional view illustrating an arrangement of a conventional gas generator.

### Best Mode for Carrying Out the Invention

The gas generator according to the present invention will now be explained.

The gas generator according to the present invention is arranged in that a burst material for adjusting an interior of a housing to be of a specified gas pressure (internal pressure) is preliminarily formed to be of a cylindrical shape (cylindrical cup-like shape or the like) and in that all gas discharging holes of the housing are closed by fitting the burst material into the interior of the housing.

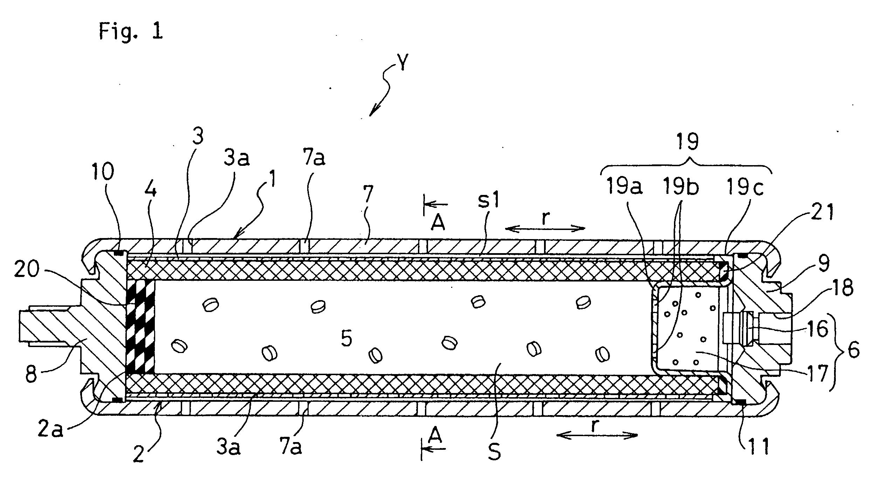

Embodiments of the gas generator of the present invention will now be explained based on Figs. 1 to 9.

The gas generator Y as illustrated in Fig. 1 is provided for expanding an airbag provided on the passenger side or one coping with collision from the side, and is comprised of principal parts such as an elongated cylindrical housing 1, a burst material 2 for closing a plurality of gas discharging holes 7a of the housing 1, an inner tube material 3 disposed within the burst material 2 (housing 1), a filter member 4, a gas generating agent 5, and an igniter 6 for combusting the gas generating agent 5.

The housing 1 is comprised of an elongated cylindrical outer tube 7 with both ends being open, and two cover members 8, 9 for closing the respective open ends of the outer tube 7. The housing 1 is arranged in that sealing materials 10, 11 are interposed through respective open ends of the outer tube 7 to be fitted therein, and respective open ends of the outer tube 7 are bent inward in a radial direction for swaging the respective cover members 8, 9 to thereby form a closed space S in the interior thereof.

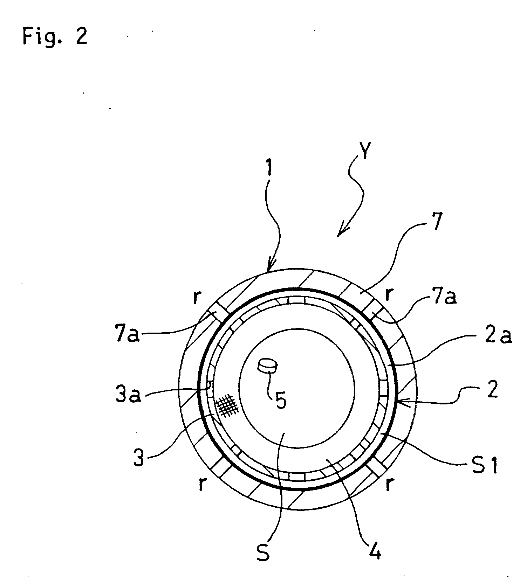

On a periphery of the outer tube 7 a plurality of gas discharging holes 7a are formed that communicate from the closed space S into an interior of an airbag (not shown). As exemplarily shown in Fig. 2, these respective gas discharging holes 7a may be formed as four gas hole rows r disposed at every 90 degrees angle when seen from the peripheral direction of the housing 1, and the gas discharging holes 7a of the respective gas hole rows r are formed along axial directions of the housing 1 at specified intervals. The gas discharging holes 7a of the respective gas hole rows r are closed by the burst material 2.

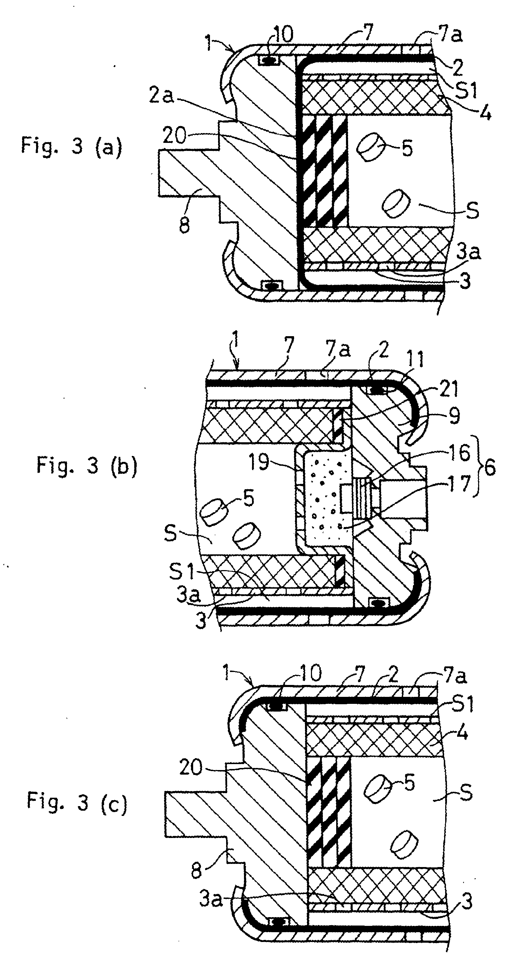

The burst material 2 is for preventing humidity within the housing 1 and for adjusting an inner pressure at the time of combustion, and is preliminarily formed into a cylindrical cup-like shape by extruding a hollow material such as aluminum, formed into a cylindrical cup-like shape by drawing a hollow material out, or formed into a cylindrical cup-like shape through forging. As also illustrated in Fig. 3(a), the burst material 2 is closely fitted to the inner periphery of the outer tube 7 until its cup bottom 2a abuts the cover member 8, and extends within the outer tube 7 from the cup bottom 2a to an open end on the cover member 9 side. All gas discharging holes 7a are closed from the interior of the housing 1, as shown in Fig. 3(b), by bending the open end on the cover member 9 side and the open end of the outer tube 7 inward in a radial direction to elastically contact the sealing material 11 with the burst material 2 being closely fitted to the inner periphery of the outer tube 7 in which the cup bottom 2a abuts the cover member 8. It should be noted that it is preferable that no clearance be formed between the burst material 2 and the inner periphery of the housing 1. The thickness of the burst material 2 shall be suitably set such it is burst at portions of the respective gas discharging holes 7a when the interior of the housing 1 has increased to a specified gas pressure (internal pressure) through combustion of the gas generating agent 5 for opening the respective gas discharging holes 7a within the housing 1 (burst material 2), and is set, for instance, to 0.05 to 0.20 mm.

The burst material 2 thus functions to seal the interior of the housing 1 (the interior of the burst material 2) through elastic contact with the sealing member 11 while closing all gas discharging holes 7a of the housing 1. The burst material 2 is further burst in accordance with an increase in gas pressure within the housing 1 through combustion of the gas generating agent 5 to thereby open the respective gas discharging holes 7a within the housing 1 and to enable discharge of gas into an airbag (not shown).

The reason for forming the burst material 2 into such a cylindrical cup-like shape is that the strength of the burst material 2 shall be reinforced through the bottom 2a such that no warp or deformation occurs at the time of performing extrusion, drawing or forging or at the time of fitting the same into the outer tube 7. Further, the reason for forming the burst material 2 through extrusion is that it shall correspond to the elongated cylindrical shape of the outer tube 7.

While the burst material 2 has been described to be one that is preliminarily formed into a cylindrical cup-like shape, it is not to exclude one that is of cylindrical shape with both ends being open. In case the burst material 2 is formed into a cylindrical shape, respective open ends of the burst material 2 and the respective open ends of the outer tube 7 shall be bend inward in a radial direction as illustrated in Figs. 3(b) and 3(c) while being closely fitted to the inner periphery of the outer tube 7 and further made to elastically contact the respective sealing materials 10, 11 of the respective cover members 8, 9 thereby, closing all gas discharging holes 7a from the interior of the housing 1.

The inner tube material 3, the filter member 4 and the gas generating agent 5 are disposed and filled into the interior of the burst material 2 in the housing 1 in this order.

The inner tube material 3 is formed into a cylindrical shape and is inserted into the interior of the burst material 2. The inner tube material 3 extends from the bottom 2a of the burst material 2 to the cover member 9 and forms an annular gas passing space S1 between the same and the inner periphery of the burst material 2. On the periphery of the inner tube material 3, a plurality of gas passing holes 3a that make inner sides of the inner tube material communicate to the gas passing space S1 are formed. As also illustrated in Fig. 2, the respective gas passing holes 3a are open at specified intervals when seen from a peripheral direction of the housing 1 and are formed along an axial direction of the housing 1.

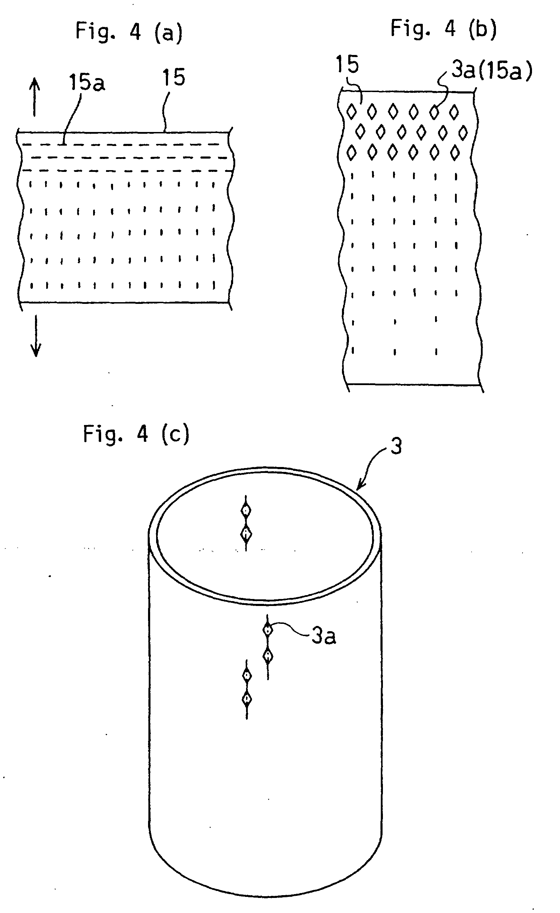

The inner tube material 3 is manufactured using expanded metal, wherein a plurality of gas passing holes 3a are opened as illustrated in Fig. 4(b) by uniformly expanding a base metal 15 with a plurality of slits 15a being formed thereon at specified intervals as illustrated in Fig. 4(a). The inner tube material 3 may alternatively be formed by forming an expanded metal of a specified length and width into a cylindrical shape as illustrated in Fig. 4(c) and fixedly attaching both terminations through joining methods such as spot welding. It should be noted that the base metal 15 should be a stainless steel thin plate or a thin plate other than of stainless steel that exhibits superior heat-resistant and pressure-resistant characteristics.

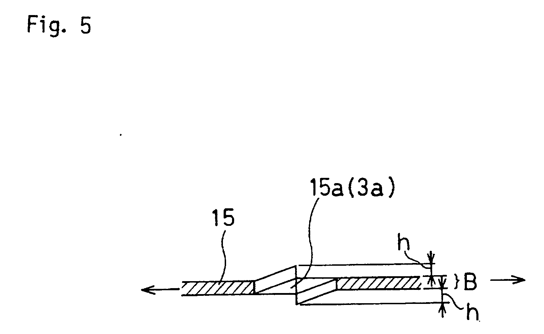

When manufacturing the inner tube material 3 of such expanded metal, each portion of the respective slits 15a will be formed into a shape that is warped to inner or outer peripheral sides by height h from a flat surface portion B of the base metal 15 as illustrated in Fig. 5 when performing expanding processes in a direction of the arrow as illustrated in Fig. 4(a). The inner tube material 3 will thus be of a structure with portions of the respective slits 15a projecting at the outer periphery thereof by height h, with a plurality of gas passing holes 3a opening in a peripheral direction and extending in an axial direction being formed, wherein these respective gas passing holes 3a will communicate with each other in a peripheral direction. When such an inner tube material 3 is inserted into the burst material 2, it will be possible to make gas pass from the respective gas passing holes 3a projecting to inner and outer peripheral sides by height h towards, the respective gas discharging holes 7a even if inflation and deformation through high pressure and high temperature gas shall be caused through combustion of the gas generating agent 5 within the housing 1. In this manner, in case the inner tube material 3 is formed of expanded metal, it will be possible to form an annular space continuing to the inner peripheral side of the burst material 2 even if the inner tube material 3 is disposed to contact the inner periphery of the burst material 2, thereby making this annular space to be the gas passing space S1.

The inner tube material 3 is not limited to one that is manufactured of expanded metal, and may be manufactured by that a porous thin steel plate (punching metal plate) formed with a plurality of gas passing holes 3a at specified intervals is formed into a cylindrical shape and terminations thereof are fixedly attached through a joining method such as spot welding. In case of the inner tube material 3 made of such porous thin steel plate, it will be necessary to form the gas passing space S1 between the same and the inner periphery of the burst material 2.

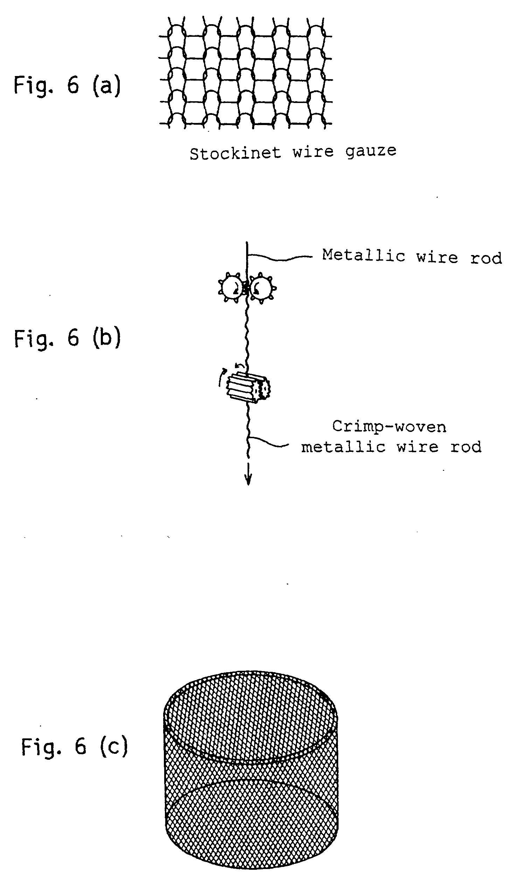

The filter member 4 is formed to be of a cylindrical shape and is closely inserted into the inner tube material 3. The filter member 4 further extends from the bottom 2a of the burst material 2 to the cover member 9. The filter member 4 may be manufactured at low cost by forming, for instance, a stockinet wire gauze as illustrated in Fig. 6(a) or an assembly of crimp-woven metallic wire rods as illustrated in Fig. 6(b) into a cylindrical shape as illustrated in Fig. 6(c). The filter member 4 may alternatively arranged as an unit of a plurality of filters sequentially laminated in an axial direction of the housing 1, and by suitably changing the number of laminations of the filter unit, it is possible to dispose the filter member 4 in accordance with the length of the housing 1 (outer tube 7). The gas generating agent 5 is then filled into the filter member 4 along an axial direction of the housing 1, and a cushion member 20 is disposed between the same and the bottom 2a of the burst material 2. The cushion member 20 is provided with the function of preventing pulverization caused by oscillation of the gas generating member 5, and it is preferable to employ an elastic body such as silicon rubber or a silicon foamed body.

The igniter 6 is comprised of a squib 16 and an enhancer 17 that is ignited by the squib 16, and is attached to the cover member 9 sides. The squib 16 is fixed through swaging the same at an accumulating hole 18 that is formed at the cover member 9 and communicates into the filter member 4. The squib 16 is ignited upon receipt of a signal indicating detection of collision from a collision sensor (not shown). The enhancer 17 is accumulated within the cap with a brim 19 abutting the cover member 9 from inside of the housing 1 and faces the squib 16 while being remote from the cover member 9 by a specified distance.

A projecting side 19a of the cap with a brim 19 is inserted into the filter member 4 from the cover member 9 side, and is comprised of a through hole 19b for jetting ignition flame of the enhancer 17 into the filter member 4. A brim portion 19c of the cap with a brim 19 extends up to the inner periphery of the burst material 2 between the filter member 4 and the cover member 9, wherein its tip end side is bent and fitted into the outer periphery of the filter member 4. The brim portion 19c of the cap with a brim 19 elastically contacts a sealing member 21 interposed between the same and the filter member 4, and direct leakage of gas from the end of the filter member 4 into the gas passing space S1 is prevented by this sealing member 21. The inner tube material 3 and the filter member 4 are then positioned within the housing 1 (burst material 2) while the cap with a brim 19 forms the gas passing space S1 through the projecting side 19a that is inserted into the filter member 4 and the brim portion 19c that is fitted to the outer periphery of the filter member 4.

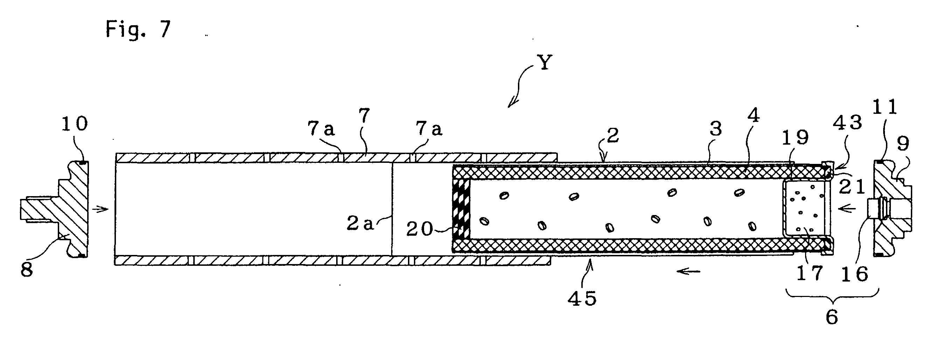

The gas generator Y of the above-described arrangement may be assembled by separately inserting the burst material 2, the inner tube material 3 and other members into the outer tube 7; alternatively, the burst material 2 or the inner tube material 3 may preliminarily formed as a uniform unit 45 as illustrated in Fig. 7, and assembly is achieved by fitting this unit 45 into the outer tube 7.

For the assembly of the unit, an assembly body 43 with the enhancer 17 being uniformly formed in addition to the inner tube material 3, the filter member 4 and other members is prepared by performing the steps of inserting the filter member 4 into the inner tube material 3, filling the gas generating agent 5 into the filter member 4, and closing respective open ends of the filter member 4 through the cushion member 20 and the cap with a brim 19 (sealing member 21).

This assembly body 43 is then inserted from the cushion member 20 side into the burst material 2 to comprise the unit 45, and by fitting this unit 45 into the outer tube 7, all of the gas discharging holes 7a are closed through the burst material 2. Fitting of the unit 45 is performed such that the open ends of the burst material 2 coincide with the open ends of the outer tube 7. The cover member 8 and the cover member 9 including the squib 16 are respectively fitted into the respective open ends of the outer tube 7 with the unit 45 being fitted within the outer tube 7,and the cover member 8 is made to abut the bottom 2a of the burst material 2 and the open ends of the burst material 2 are closed by the cover member 9 with the sealing material 11 being interposed. By bending the respective open ends of the outer tube 7 (including open ends of the burst material 2) inward in a radial direction, the respective cover members 8, 9 are swaged and fixed to the outer tube 7, thereby operations for assembling the gas generator Y are completed [see Fig. 1 and Fig. 7]. It should be noted that the unit 45 is only exemplary, and variations such as one including no cap with a brim 19 are possible.

Actions of the gas generator Y will now be explained.

Upon detection of collision of an automobile through a collision sensor (not shown), the enhancer 17 is ignited by actuating the squib 16 of the igniter 6. The ignition flame of the enhancer 17 is jetted from the through hole 19b of the cap with a brim 19 into the filter member 4, and by forcibly igniting the gas generating agent 5 through this flame for combustion, high temperature gas is generated.

The high temperature gas that is generated within the housing 1 flows into the filter member 4, undergoes slug collection and cooling thereat and flows through the respective gas passing holes 3a of the inner tube material 3 to the gas passing space S1. In the course of combustion of the gas generating agent 5 at which the pressure within the housing 1 increases to a specified gas pressure (inner pressure), the burst material 2 is burst at portions of the respective gas discharging holes 7a to communicate the interior of the housing 1 to the airbag (not shown). Gas that has been purified at the filter member 4 is made uniform in pressure within the gas passing space S1 and is uniformly discharged from the respective gas discharging holes 7a into the airbag for rapidly expanding and inflating the airbag.

As explained so far, the gas generator Y of the present invention enables to close all of the gas discharging holes 7a of the housing 1 by closely fitting a burst material 2, which is preliminarily formed into a cylindrical shape (cylindrical cup-like shape or the like), to the inner periphery of the outer tube 7. It is therefore not required to perform mechanical processing to make the inner periphery of the outer tube 102 be of a suitable surface roughness or to perform operations for purification thereof because of closing the gas discharging holes 102a of the housing 101 by means of the burst plate 105 as in the prior art (see Fig. 11).

Especially in case the inner tube material 3, the filter member 4 and other members are preliminarily disposed into the burst material 2 to comprise the unit 45, disposing of the burst material 2, the inner tube material 3 and other members with respect to the housing 1 can be completed by simply fitting this unit 45 into the outer tube 7 so that it is possible to simplify operations for assembling the gas generator Y and to thereby improve productivity.

Further, in case the burst material 2 is formed to be of a cylindrical shape (cylindrical cup-like shape or the like), the burst material 2 may be simply manufactured through extrusion, drawing or forging according to downsizing of the gas generator Y, and all of the gas discharging holes 7a of the housing 1 may be simply closed by fitting the burst material 2.

Moreover, in case of employing a structure in which the burst material 2 is formed to be of a cylindrical cup-like shape and open ends thereof are bent together with the open ends of the outer tube 7, the interior of the burst material 2 (interior of the housing 1) may be sealed by disposing the sealing member 11 only at the cover member 9. In this sense, without necessity of disposing the sealing material 10 at the cover member 8, sealing properties (tight sealing properties) of the respective gas discharging holes 7a and the interior of the housing 1 can be ensured while decreasing the number of sealing spots of the housing 1.

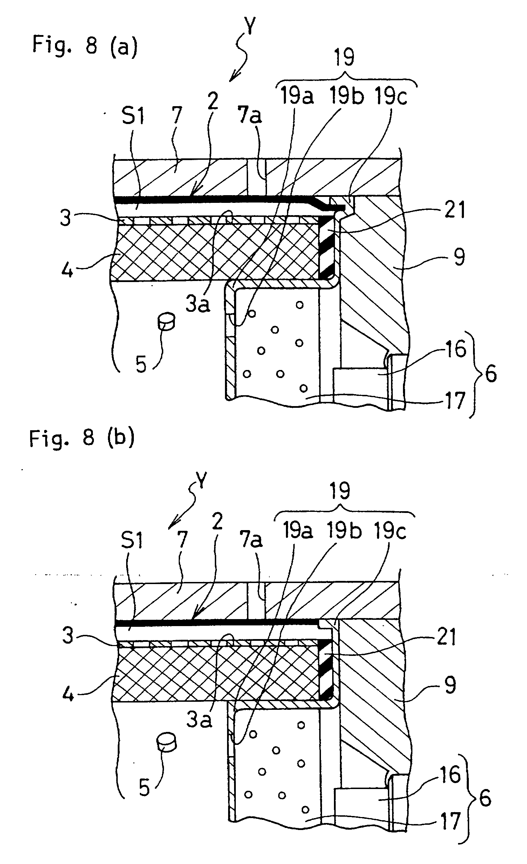

It should be noted that while the gas generator Y of the present invention is exemplarily illustrated to be of a structure in which open ends of the burst material 2 are bent together with open ends of the outer tube 7 and are made to elastically contact the sealing material 11, it is alternatively possible to employ an arrangement in which the interior of the burst material 2 is sealed by swaging the brim portion 19c of the cap with a brim 19 to an open end of the burst material 2 as illustrated in Fig. 8(a) or an arrangement in which the open end of the burst material 2 is closed by the brim portion 19c of the cap with a brim 19 as illustrated in Fig. 8(b).

While the gas generator Y of the present invention has been illustrated to comprise a housing structure in which respective open ends of the outer tube 7 are closed by two cover members 8, 9, it is also possible to arrange the housing 1 such that it comprises a bottomed outer tube with one opening being formed on one end and a single cover member that closes this open end of the outer tube 7. In such a housing structure, the cover member is either fixed to the open end of the outer tube through swaging or the cover member and the open end of the outer tube is connected through frictional pressure welding. In any case, all of the gas discharging holes of the housing are closed by fitting the burst material 2 of a cylindrical cup-like shape (or cylindrical shape) into the outer tube. It is alternatively possible to employ an arrangement in which the gas passing space S1 is formed between the outer periphery of the filter member 4 and the inner periphery of the burst material 2 without fitting the inner tube material 3 into the burst material 2.

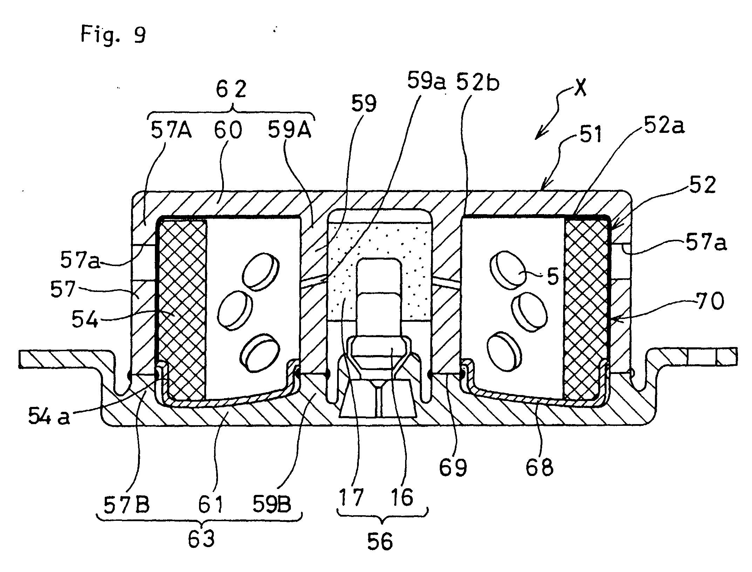

While the gas generator Y of the present invention has been illustrated as to be used for expanding an airbag provided on the passenger side or one coping with collision from the side, it is also applicable to one for expanding an airbag provided on a driver side as illustrated in Fig. 9. It should be noted that in Fig. 9, reference numerals that are identical with those of Fig. 1 indicate identical members, and explanations thereof will be omitted.

In the gas generator X of Fig. 9, a short cylindrical housing 51 is comprised of an upper enclosure 62 and a lower enclosure 63. The housing 51 is arranged to be of a double cylindrical structure in which an outer tube wall 57A of the upper enclosure 62 is butted to an outer tube protrusion 57B of the lower enclosure 63 or in which an inner tube wall 59A of the upper enclosure 62 is butted to an inner tube protrusion 59B of the lower enclosure 63 for joining through welding (e.g. frictional pressure welding). In this manner, the housing 51 is arranged in that an outer tube 57 is formed by the outer tube wall 57A and the outer tube protrusion 57B, an inner tube 59 is formed by the inner tube wall 59A and the inner tube protrusion 59B, and upper and lower ends of the respective tubes 57, 59 are closed by two, upper and lower cover plates 60, 61 of the respective enclosures 62, 63. A plurality of gas discharging holes 57a communicating from the interior of the housing 51 to the airbag (not shown) is formed on an outer periphery of the outer tube 57 such that the respective gas discharging holes 57a are open at specified intervals when seen from a peripheral direction of the housing 1. The respective gas discharging holes 57a are further closed by a burst material 52.

The burst material 52 is preliminarily formed into a cylindrical cup-like shape, similar to the burst material 2 of Fig. 1, and an inserting hole 52b for piercing the inner tube 59 through is formed on a cup bottom 52a thereof. The burst material 52 is closely inserted into an inner periphery of the outer tube 57 by fitting the inserting hole 52 from the cup bottom 52a side to an outer periphery of the inner tube 59 of the upper enclosure 58 until the cup bottom 52a abuts the cover plate 60, and extends within the outer tube 57 from the cup bottom 52a to an open end of the outer tube 57. The burst material 52 is closely fitted into the inner periphery of the outer tube 57 with the cup bottom 52a abutting the cover plate 60 and closes all of the gas discharging holes 57a from inside of the housing 51 by covering the open end by a radiation plate 68. It is preferable that no clearance be formed between the burst material 52 and the inner periphery of the housing 1. In order to attain similar functions as the burst material 2 of Fig. 1, the thickness of the burst material 52 is set to be 0.05 to 0.20 mm. The burst material 52 may also be of cylindrical shape that is closely fitted into the outer tube 57.

A cylindrical filter member 54 is disposed on the inner periphery of the burst material 2 of the housing 1, and a gas generating agent 5 is filled into the filter member 54. The filter member 54 is inserted to be closely adhering to the inner periphery of the burst material 52 and extends along a distance between the upper and lower covers 60, 61. An outer periphery stepped portion 54 into which the radiation plate 68 is fitted is formed on the cover member 61 side of the filter member 3, and an open end on the cover member 61 side is closed by the radiation plate 68. The radiation plate 68 is also provided with a function of preventing ignition of the gas generating agent 5 caused by frictional pressure welding, since the plate separates the gas generating agent 5 from a joint portion 69 of the respective enclosures 62, 63. The filter member 54 is manufactured, similar to the filter member 4 of Fig. 1, by forming stockinet wire gauze or crimp-woven metallic wire rods [see Fig. 6]. An igniter 56 comprised of a squib 16 and an enhancer 17 is disposed within the inner tube 59 of the housing 51.

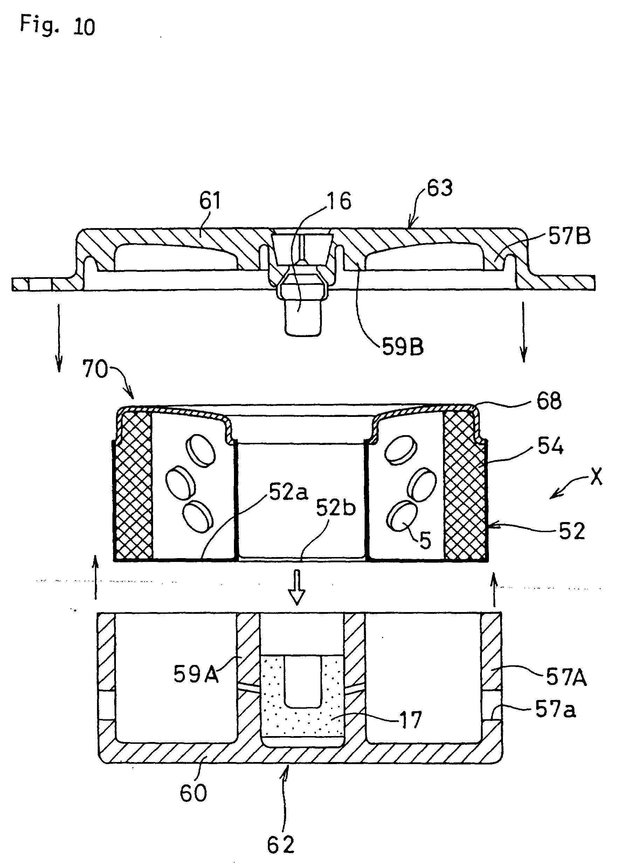

The gas generator X of the above-described arrangement may be assembled by separately inserting the burst material 52, the filter member 4 and other members into the outer tube 57 of the upper enclosure 62; alternatively, the filter member 4 may be made uniform within the burst material 52 to comprise an unit 70 and assembly is achieved by fitting this unit 70 into the outer tube 57. Especially in case the burst material 52 is preliminarily formed to be of a double cylindrical cup-like shape as illustrated in Fig. 9, it is possible to form the unit 70 by inserting and filling the filter member 54 and the gas generating agent 5 into the burst material 52 and by closing the open end of the burst material 52 by the radiation plate 68 such that the burst material 52, the filter member 54, and the gas generating agent 5 are made uniform. By fitting this unit 70 from the bottom 52a side of the burst material 52 to inside of the outer tube 57 and outside of the inner tube 59 of the upper enclosure 62, all of the gas discharging holes 57a are closed by the burst material 52. After fitting the enhancer 17 into the inner tube wall 59A and the squib 16 into the inner tube protrusion 59B of the lower enclosure 63 with the unit 70 being fitted into the upper enclosure 62, frictional pressure welding is performed with the upper enclosure 62 and the lower enclosure 63 being butted, operations for assembling the gas generator X are completed [see Fig. 10].

Actions of the gas generator X will now be explained.

Upon detection of collision of an automobile through a collision sensor (not shown), the enhancer 17 is ignited by actuating the squib 16 of the igniter 56. The ignition flame of the enhancer 17 is jetted from a fire transmitting hole 59a of the inner tube 59 into the filter member 54, and by forcibly igniting the gas generating agent 5 through this flame for combustion, high temperature gas is generated.

The high temperature gas that is generated within the housing 51 flows into the filter member 54, undergoes slug collection and cooling thereat, and flows to the burst material 52. In the course of combustion of the gas generating agent 5 at which the pressure within the housing 51 increases to a specified gas pressure (inner pressure), the burst material 52 is burst at portions of the respective gas discharging holes 57a to communicate the interior of the housing 51 to the airbag (not shown). Gas that has been purified at the filter member 54 is uniformly discharged from the respective gas discharging holes 57a into the airbag for rapidly expanding and inflating the airbag.

As explained so far, the gas generator X also enables it to close all of the gas discharging holes 57a of the housing 51 by closely fitting the burst material 52, which is preliminarily formed into a cylindrical cup-like shape (or cylindrical shape), to the inner periphery of the outer tube 57. Especially in case the filter member 54, the gas generating agent 5 and other members are preliminarily accumulated within the burst material 52 to comprise the unit 70 as illustrated in Fig. 9, disposing of the burst material 52, the filter member 54 and other members with respect to the housing 51 can be completed by simply fitting this unit 70 into the upper enclosure 62 so that it is possible to simplify operations for assembling the gas generator X and to thereby improve productivity.

While the gas generator X has been explained with reference to the housing 51 of double cylindrical structure, it is also applicable to a housing of single cylindrical structure comprised of the upper enclosure and the lower enclosure.

While the gas generators X, Y of the present invention have been explained to be of an arrangement in which the gas generating agent 5 is combusted by a single igniter 6, 56, it is alternatively applicable as a gas generator with more than two igniters being disposed in the housing (e.g. one of an arrangement in which the interior of the housing is partitioned into a plurality of combustion chambers, wherein gas generating agents within the respective combustion chambers are respectively combusted by the plurality of igniters), and as all kinds of gas generators employing a structure in which gas discharging holes of the housing are closed by a burst material. Also in this case, all of the gas discharging holes of the housing are closed by fitting a cylindrical (cylindrical cup-like shaped or the like) burst material into the housing.

While the burst materials 2, 52 have been explained to be manufactured through extrusion, drawing or forging, they are not limited to these, and it is alternatively possible to manufacture these by molding a metallic thin plate of, for instance, aluminum of a thickness of 0.05 to 0.20 mm, by using a mold.

### Industrial Applicability

In the gas generator of the present invention, all of the gas discharging holes of the housing may be closed by simply fitting a burst material, which is preliminarily formed into a cylindrical shape (cylindrical cup-like shape or the like), into the housing. Since it will not be required to perform mechanical processing or operations for purification of the inner periphery of the housing (outer tube), as it was conventionally necessary for closing the gas discharging holes of the housing 1, it is possible to improve productivity of the gas generator. Especially in case the filter member and gas generating agent are disposed and filled into the burst material to preliminarily form an unit, the filter member and other members may be easily disposed within the housing with the effect of simplifying operations for assembling the gas generator and to achieve further improvements in productivity.

The gas generator according to the present invention that is employed as a gas generator (for use with an airbag) provided on the passenger side or one coping with collision from the side may specifically be of a style in which the arrangement is comprised of a housing formed by closing both open ends of an elongated cylindrical outer tube by means of two cover members and by swaging the respective cover members through bending the respective open ends of the outer tube inward in a radial direction, wherein an igniter is disposed at either cover member for combusting a gas generating agent within a filter member. In the gas generator (for use with an airbag) provided on the passenger side or one coping with collision from the side, all of the gas discharging holes of the housing may be closed by simply fitting a burst material, which is preliminarily formed into a cylindrical shape (cylindrical cup-like shape or the like), into the housing so that it is possible to improve productivity. In such an arrangement, it is preferable to fit a burst material, which is preliminarily formed into a cylindrical cup-like shape, into the housing and to bend open ends of the burst material and open ends of the outer tube inward with respect to a radial direction to elastically contact a sealing material of a cover member. With this arrangement, it is possible to seal the interior of the burst material (housing) by simply disposing the sealing material for closing an open end of the burst material at either cover member, thereby decreasing the number of sealing spots and ensuring sealing properties (tight sealing properties) of all of the gas discharging holes and the interior of the housing.

The gas generator according to the present invention that is employed as a gas generator (for use with an airbag) provided on a driver side may specifically be of a style in which the arrangement is comprised of a housing of double cylindrical structure including a short cylindrical outer tube and inner tube and two, upper and lower cover plates for closing both open ends of the respective tubes, wherein a filter member and a gas generating agent are disposed and filled between a burst material and the inner tube and wherein an igniter is disposed within the inner tube. With this arrangement, it is possible to close all of the gas discharging holes of the housing by simply fitting a burst material, which is preliminarily formed into a cylindrical shape (cylindrical cup-like shape), into the housing, to thereby improve productivity.

## Claims

1. A gas generator comprising a tubular housing having a plurality of gas discharging holes,
wherein a burst material, which is preliminarily formed into a tubular shape, is fitted into the housing, and wherein all of the gas discharging holes of the housing are closed by the burst material.

2. The gas generator as claimed in Claim 1, wherein the burst material is formed into a cylindrical cup-like shape.

3. A gas generator comprising a tubular housing having a plurality of gas discharging holes,
wherein a burst material, which is preliminarily formed into a tubular shape, is fitted into the housing, with all of the gas discharging holes of the housing being closed by the burst material,
wherein a tubular filter member is disposed within the burst material and a gas generating agent for generating high temperature gas upon combustion is filled into the filter member, and
wherein the burst material is burst in accordance with an increase in gas pressure within the housing through combustion of the gas generating agent.

4. The gas generator as claimed in Claim 3, wherein the filter member and the gas generating agent are disposed and filled into the interior of the burst material to preliminarily comprise an unit, and
wherein the unit is fitted into the housing.

5. The gas generator as claimed in Claim 3 or 4, wherein the burst material is formed into a cylindrical cup-like shape.

6. The gas generator as claimed in Claim 3,
wherein the housing is of cylindrical structure,
wherein the burst material, which is preliminarily formed into a cylindrical shape, is fitted into the housing such that all of the gas discharging holes of the housing are closed by the burst material,
wherein a cylindrical filter member is disposed into the burst material and a gas generating agent for generating high temperature gas through combustion is filled into the filter member, and
wherein an igniter for combusting the gas generating agent within the filter member is disposed in the housing.

7. The gas generator as claimed in Claim 6, wherein the filter member and the gas generating agent are disposed and filled into the interior of the burst material to preliminarily comprise an unit, and
wherein the unit is fitted into the housing.

8. The gas generator as claimed in Claim 6 or 7, wherein the burst material is formed into a cylindrical cup-like shape.

9. The gas generator as claimed in Claim 6,
wherein the housing is of a structure comprised of an elongated cylindrical shaped outer tube with both ends being open and two cover members that are respectively fitted to the respective open ends of the outer tube, with the respective cover members being swaged by bending respective open ends of the outer tube inward in a radial direction, and
wherein an igniter for combusting the gas generating agent within the filter member is disposed at either one of the cover members.

10. The gas generator as claimed in Claim 9, wherein the filter member and the gas generating agent are disposed and filled into the interior of the burst material to preliminarily comprise an unit, and
wherein the unit is fitted into the housing.

11. The gas generator as claimed in Claim 9 or 10, wherein the burst material is formed into a cylindrical cup-like shape.

12. The gas generator as claimed in Claim 9, wherein the burst material is fitted into the outer tube, and
wherein the open ends of the burst material and the open ends of the outer tube are bend inward in a radial direction to elastically contact a sealing material of the cover member.

13. The gas generator as claimed in Claim 12, wherein the filter member and the gas generating agent are disposed and filled into the interior of the burst material to preliminarily comprise an unit, and
wherein the unit is fitted into the housing.

14. The gas generator as claimed in Claim 12 or 13, wherein the burst material is formed into a cylindrical cup-like shape.

15. The gas generator as claimed in Claim 6,
wherein the housing is arranged to be of a double cylindrical structure comprised of short cylindrical outer tube and inner tube and two, upper and lower cover plates for closing upper and lower ends of the outer tube and the inner tube,
wherein the burst material is fitted into the outer tube,
wherein the filter member is disposed at an inner periphery of the burst material and a gas generating agent is filled into the filter member, and
wherein an igniter for combusting the gas generating agent within the filter member is disposed within the inner tube.

16. The gas generator as claimed in Claim 15, wherein the filter member and the gas generating agent are disposed and filled into the interior of the burst material to preliminarily comprise an unit, and
wherein the unit is fitted into the housing.

17. The gas generator as claimed in Claim 15 or 16, wherein the burst material is formed into a cylindrical cup-like shape.
